# EUROPÄISCHE PATENTSCHRIFT

(11) **EP 1 083 118 B1**
(45) Veröffentlichungstag und Bekanntmachung des Hinweises auf die Patenterteilung: **12.07.2006**
(21) Anmeldenummer: 00119236.8
(22) Anmeldetag: 06.09.2000
(51) Int. Cl.: B62D 29/00, B62D 25/08

(54) **Montageträger für die Frontendmodule von Kraftfahrzeugen**
Structural assembly support for the front part of a vehicle
Support d'assemblage d'un module avant de véhicule automobile

(30) Priorität: 11.09.1999 DE 29916016 U
(43) Veröffentlichungstag der Anmeldung: 14.03.2001
(73) Patentinhaber: HBPO GmbH, 59552 Lippstadt (DE)
(72) Erfinder: Kersting, Dirk, 59555 Lippstadt (DE); Schmidt, Ralf, 59302 Oelde (DE); Braun, Dieter, 33378 Rheda-Wiedenbrück (DE)
(74) Vertreter: Elbertzhagen, Otto

(56) Entgegenhaltungen:
- EP-A- 0 652 150
- DE-A- 19 827 066
- DE-A- 19 850 590
- FR-A- 2 804 649
- US-A- 5 658 041

## Beschreibung

Die Erfindung bezieht sich auf einen Montageträger der im Gattungsbegriff des Anspruchs 1 näher bezeichneten Art.

Bei modernen Fahrzeugkonstruktionen werden Frontendmodule mit allen Anbauten im Frontbereich des Fahrzeugs komplett vorgefertigt und anschließend am Vorderwagen des betreffenden Fahrzeugs angebracht. Hierbei kommt es darauf an, die Vorderwagenstruktur für erhöhte Crashbedingungen zu versteifen. Die Ausführung des Montageträgers als das tragende Element des gesamten Frontendmoduls spielt hierbei eine erhebliche Rolle. Zunächst ist man davon ausgegangen, eine großflächige Metallstruktur am Vorderwagen zu schaffen, indem man den Querträger des Montageträgers als oberen Schloßquerträger und darunter einen Stoßfängerquerträger vorgesehen hat, welche durch Streben zu einem biegesteifen Rahmenwerk verbunden worden sind. Solche Konstruktionen werden immer mehr durch Montageträger ersetzt, die überwiegend als Kunststoffteile ausgebildet sind. Auch hierbei hat man bislang auf ein großflächiges Rahmenwerk solcher Montageträger gesetzt.

Von daher ist es - wie aus dem gattungsbildenden Dokument US-A-5,658,041 - bekannt, den oberen Querträger, den sogenannten Schloßquerträger, des Montageträgers in Hybridbauweise auszuführen. Der Querträger ist hierbei ein Spritzgußteil aus glasfaserverstärktem Thermoplast, der mit Metallverstärkungen ausgestattet ist, die in das für die Herstellung des Querträgers notwendige Spritzgußwerkzeug eingelegt werden. Man erhält hierdurch ein biegesteifes, gewichtsoptimiertes Bauteil. Dennoch sind die bekannten in dieser Hybridweise hergestellten Montageträger insgesamt in ihrer Gestalt als ein vielstrebiges Rahmenwerk mit unterem Stoßfängerquerträger ein gewichtiges Bauteil, das zudem noch im Hinblick auf unterschiedliche Anbauten wenig Flexibilität zuläßt. Hier geht es insbesondere um die Notwendigkeit, für eine Fahrzeugreihe unterschiedliche Kühlergrößen vorsehen zu können, die vor allem in Höhenrichtung ein variables Maß aufweisen, um eine Anpassung der Kühlleistung an die jeweilige Motorversion zu erzielen.

Aus dem Dokument DE 198 27 066 A1 ist es bekannt, einen Montageträger, der einstückig aus einem oberen Querträger und daran anschließenden Vertikalstreben mit Flanschen zur Verbindung mit den Fahrzeuglängsträgern mittels zusätzlicher, angesetzter Streben zu versteifen, die im unteren Bereich an den Vertikalstreben und im mittigen Bereich an den Querträger angeschraubt sind.

Der Erfindung liegt deshalb die Aufgabe zugrunde, einen Montageträger der gattungsgemäßen Art zu schaffen, der einen besonders einfachen und trotzdem biegesteifen Aufbau hat und der den Einbau unterschiedlicher Kühlergrößen ermöglicht.

Diese Aufgabe wird bei einem Montageträger der gattungsbildenden Art nach der Erfindung durch die kennzeichnenden Merkmale des Anspruchs 1 gelöst.

Für die Erfindung ist wesentlich, daß der Montageträger mit seinem mittleren Bereich und den nach unten hin anschließenden Vertikalstreben ein kopfstehendes U bildet, welches folglich nach unten hin offen ist. Dabei sind jetzt die Vertikalstreben in die tragende Funktion des Montageträgers voll einbezogen, indem sie die gleichen Festigkeitseigenschaften, vor allem die gleiche Steifigkeit, wie der Querträger aufweisen. Man erreicht so auf einfachste Weise, nämlich mit nur drei Elementen, dem Querträger und den beiden Vertikalstreben, eine leichte, hochfeste Verbindungskonstruktion zwischen den vier Aufnahmepunkten an dem betreffenden Fahrzeug, nämlich den beiden Kotflügelbänken und den beiden Vorderenden der Fahrzeuglängsträger. Dies wird allein über den Querträger, der mit seinen beiden Enden mit den Kotflügelbänken fest verbunden wird und über die daran fest angeordneten Vertikalstreben, die mit ihren Flanschen an den Vorderenden der Fahrzeuglängsträger festgeschraubt werden, erreicht. Durch den nach unten hin offene Einbauraum zwischen den beiden Vertikalstreben, der nach oben hin durch den Mittenbereich des Querträgers abgeschlossen ist, hat man die Möglichkeit, unterschiedliche Kühlergrößen mit entsprechend verschiedender Höhe unterzubringen. Im übrigen können alle weiteren Anbauten in einfacher Weise an dem Querträger und an den Vertikalstreben vorgenommen werden, ohne einen in sich geschlossenen Rahmen vorsehen zu müssen. Dies ermöglicht eine bessere Anpassung der Anbauteile an die unterschiedlichen Crashbedingungen, so daß erst bei Crashs mit höheren Geschwindigkeiten der Montageträger voll belastet wird und darüber eine Krafteinleitung in die Karosseriestruktur erfolgt.

Vorteilhafte Ausgestaltungsmerkmale der Erfindung ergeben sich aus den Unteransprüchen. Zur weiteren Versteifung können zwischen den Vertikalstreben und dem Mittenbereich des Querträgers Diagonalstreben vorgesehen werden, welche die an sich großteilige Bauweise des Montageträgers insgesamt nicht wesentlich stören, aber die Steifigkeit des Montageträgers im Hinblick auf seitliche Krafteinleitungen erhöhen.

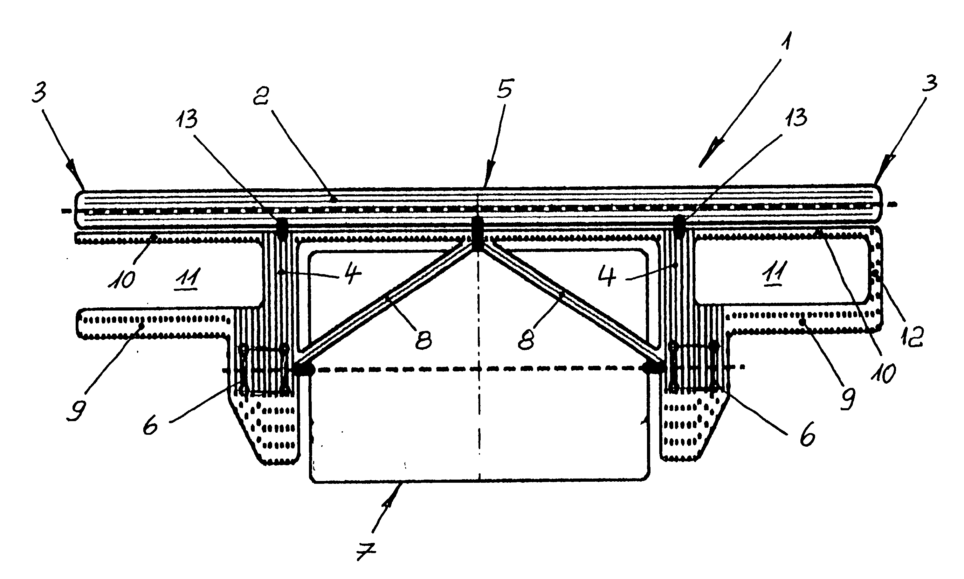

Die Erfindung wird nachfolgend anhand der Zeichnung an einem Ausführungsbeispiel noch näher erläutert. Die Zeichnung zeigt in schematischer Frontansicht einen Montageträger für Frontendmodule von Kraftfahrzeugen.

Im einzelnen zeigt die Zeichnung eine Trägereinheit 1, die insgesamt den Montageträger bildet. Sie besteht aus einem oberen Querträger 2, der auch als Schloßquerträger zu bezeichnen ist. Der in der Einbaulage im wesentlichen horizontal verlaufende Querträger 2 hat speziell ausgebildete Enden 3, die mit entsprechenden Aufnahmepunkten an den Vorderenden der Kotflügelbänke des betreffenden Fahrzeugs fest verbunden werden können.

Im Abstand von den Enden 3 sind an den Querträger 2 nach unten hin vorstehende Vertikalstreben 4 angesetzt oder einstückig angeformt. In mehrteiliger Ausführung besteht zwischen dem oberen Querträger 2 und den Vertikalstreben 4 eine hochfeste Schraubverbindung 13, die in der Zeichnung lediglich angedeutet ist.

Der obere Querträger 2 ist in Hybridbauweise ausgeführt, besteht also aus einem Spritzgußteil aus glasfaserverstärktem Kunststoff, wobei die notwendigen versteifenden Metalleinlagen sogleich in das Kunststoffmaterial eingespritzt sind. In gleicher Weise können auch die Vertikalstreben 4 aufgebaut sein, was ohnehin dann der Fall ist, wenn die Vertikalstreben 4 mit dem Träger 2 einstückig sind. Wichtig ist, daß die Vertikalstreben 4 die gleichen Festigkeitseigenschaften wie der obere Querträger 2 haben und auch in thermischer Hinsicht die gleichen Ausdehnungseigenschaften aufweisen, um die Spaltmaße am Frontendmodul und am Vorderwagen des betreffenden Fahrzeugs so gering wie möglich halten zu können. Man kann dies auch dann passend aufeinander abstimmen, wenn die Vertikalstreben lediglich aus einem faserverstärkten Kunststoff oder aus einem Leichtmetall, wie Aluminium, bestehen.

Der Mittenbereich 5 des Querträgers 2, der zwischen den beiden Anschlußstellen der Vertikalstreben 4 liegt, und die Vertikalstreben liegen im wesentlichen in einer gemeinsamen Ebene, bei der es sich in Einbaulage vorwiegend um eine Vertikalebene handelt. Um in dieser Ebene die Vertikalstreben 4 und den Querträger 2 besonders steif miteinander zu verbinden, können Diagonalstreben 8 vorgesehen sein, die unterhalb der auf die Längserstreckung bezogenen Mitte des Querträgers 2 daran fest angesetzt oder einstückig angeformt sind und die innenseitig an einen Bereich der Vertikalstreben 4 anschließen, in dessen Höhe Flansche 6 rückseitig in Fahrzeuglängsrichtung gesehen angeordnet sind. Diese Flansche 6 dienen zur Verbindung der Trägereinheit 1 mit den Vorderenden der bei den Fahrzeugen üblichen Längsträger. Vorzugsweise sind die Diagonalstreben 8 in gleicher Weise wie die Vertikalstreben 4 ausgeführt.

Der Mittenbereich 5 des Querträgers 2 und die Vertikalstreben 4 umschließen einen nach unten offenen Einbauraum in Gestalt eines kopstehenden U, in dem ein Kühlermodul 7 aufgenommen werden kann, dessen Höhe nach unten hin durch die Trägereinheit 1 nicht eingeschränkt ist. Ein solches Kühlmodul kann mittels eines begrenzt elastischen Lagers mit der Trägereinheit 1 verbunden werden, damit bei einem Crash je nach Stärke zunächst der elastische Weg der Kühlmodullagerung ausgenutzt wird, ohne Kräfte auf die Trägereinheit 1 zu übertragen.

Die Trägereinheit kann durch Horizontalstreben 9 und 10, die an den Außenseiten der Vertikalstreben 4 vorstehend angeordnet sind, ergänzt werden. Diese Horizontalstreben 9 und 10 umschließen eine Scheinwerferaufnahme 11, die, wie in der rechten Seite der Zeichnung dargestellt, mittels einer weiteren, die Horizontalstreben 9 und 10 verbindenden Streben 12 voll umschlossen sein kann.

## Patentansprüche

1. Montageträger für Frontendmodule von Kraftfahrzeugen, wie PKWs, Kleinlaster oder dergl., mit einem oberen, beidendig mit den Kotflügelbänken des Fahrzeugs verschraubbaren Querträger (2) und mit zwei mit dem Querträger (2) verbundenen, daran in Abstand von den Enden (3) des Querträgers (2) nach unten anschließenden Vertikalstreben (4), an denen Flansche (6) zur Verbindung mit den Fahrzeuglängsträgern angeordnet sind, wobei der Querträger (2) in Hybridbauweise als Kunststoffspritzgußteil mit eingespritzten Metalleinlagen ausgeführt ist wobei die Vertikalstreben (4) und der Querträger (2) eine biegesteife Trägereinheit (1) bilden,
**dadurch gekennzeichnet,**
**daß** die Vertikalstreben (4) einerseits und der Querträger (2) andererseits separat gefertigte Bauteile sind und der Querträger (2) mit den beiden Vertikalstreben (4) zur Bildung der Trägereinheit (1) kraft- sowie formschlüssig fest verschraubt und/oder verklebt ist.

2. Montageträger nach Anspruch 1,
**dadurch gekennzeichnet,**
**daß** der zwischen den Verbindungsstellen mit den Vertikalstreben (4) liegende Mittenbereich (5) des Querträgers (2) und die Vertikalstreben (4) in einer gemeinsamen Ebene angeordnet sind.

3. Montageträger nach Anspruch 1 oder 2,
**dadurch gekennzeichnet,**
**daß** auch die Vertikalstreben (4) in der Hybridbauweise des Querträgers (2) ausgeführt sind, wobei die Steifigkeitseigenschaften und die thermischen Eigenschaften des Querträgers (2) und der beiden Vertikalstreben (4) gleich sind.

4. Montageträger nach einem der Ansprüche 1 - 3,
**dadurch gekennzeichnet,**
**daß** die Vertikalstreben (4) aus faserverstärktem Kunststoff bestehen.

5. Montageträger nach Anspruch 4,
**dadurch gekennzeichnet,**
**daß** die Vertikalstreben (4) aus Leichtmetall bestehen.

6. Montageträger nach Anspruch 4 oder 5,
**dadurch gekennzeichnet,**
**daß** der Werkstoff der Vertikalstreben (4) in seinen Steifigkeitseigenschaften und seinen thermischen Eigenschaften dem Werkstoff des Querträgers (2) entspricht.

7. Montageträger nach einem der Ansprüche 1 bis 6,
**dadurch gekennzeichnet,**
**daß** zwischen dem Abschnitt in Höhe des Flansches (6) jeder Vertikalstrebe (4) und der Mitte des Querträgers (2) bezogen auf dessen Längserstreckung Diagonalstreben (8) angeordnet sind, die aus demselben Werkstoff oder Werkstoffverbund wie die Vertikalstreben bestehen.

8. Montageträger nach einem der Ansprüche 1 bis 7,
**dadurch gekennzeichnet,**
**daß** an den Außenseiten der Vertikalstreben (4) Scheinwerferaufnahmen (11) unterseitig und/oder oberseitig übergreifende Horizontalstreben (9, 10) angeformt sind.

## Claims

1. Structural assembly support for front end module of a motor vehicle, such as passenger cars, small vans or the like, with an upper cross member (2) which can be screwed at each end to the wing parts of the vehicle and with two vertical struts (4) which are connected to the cross member (2) and follow on from same down at a distance from the ends (3) of the cross member (2), wherein flanges (6) are arranged on the vertical struts to connect with the longitudinal supports of the vehicle, wherein the cross member (2) is designed in hybrid fashion as an injection moulded plastics part with moulded-in metal inserts whereby the vertical struts (4) and the cross member (2) form one bending-resistant support unit (1)
**characterised in that**
the vertical struts (4) on the one side and the cross member (2) on the other are separately manufactured component parts and the cross member (2) is fixedly screwed and/or stuck with force locking and positive locking engagement to the two vertical struts (4) to form the support unit (1).

2. Structural assembly support according to claim 1,
**characterised in that**
the centre region (5) of the cross member (2) lying between the connecting points with the vertical struts (4), and the vertical struts (4) are mounted in a common plane.

3. Structural assembly support according to claim 1 or 2,
**characterised in that**
the vertical struts (4) are also designed in the hybrid structural manner of the cross member (2) whereby the rigidity properties and the thermal properties of the cross member (2) and of the two vertical struts (4) are the same.

4. Structural assembly support according to one of claims 1 to 3,
**characterised in that**
the vertical struts (4) are made of fibre-reinforced plastics.

5. Structural assembly support according to claim 4,
**characterised in that**
the vertical struts (4) are made of light metal.

6. Structural assembly support according to claim 4 or 5,
**characterised in that**
the material of the vertical struts (4) corresponds in its rigidity properties and its thermal properties to the material of the cross member (2).

7. Structural assembly support according to one of claims 1 to 6,
**characterised in that**
between the section level with the flange (6) of each vertical strut (4) and the centre of the cross member (2) in relation to the longitudinal extension thereof there are diagonal struts (8) which are made of the same material or material compound as the vertical struts.

8. Structural assembly support according to one of claims 1 to 7,
**characterised in that**
on the outsides of the vertical struts (4) horizontal stays (9,10) are formed engaging over headlight sockets (11) on the underneath and/or on the top side.

## Revendications

1. Support de montage pour modules avant de véhicules automobiles, comme voitures particulières, camionnettes ou analogues, avec une traverse supérieure (2) pouvant être vissée, par les deux extrémités, aux bancs des ailes du véhicule automobile, et avec deux étais verticaux (4) reliées à la traverse (2), à distance des extrémités (3) de ladite traverse (2), raccordés vers le bas, auxquels des flasques (6) sont agencés pour l'assemblage aux longerons du véhicule automobile, la traverse (2) étant réalisée selon le mode de construction hybride en tant que pièce moulée par injection en matière synthétique, avec des intercalaires métalliques insérés, les étais verticaux (4) et la traverse (2) formant une unité de support (1) résistante à la flexion,
**caractérisé en ce que**
les étais verticaux (4), d'une part, et la traverse (2), d'autre part, sont des pièces fabriquées séparément, et la traverse (2), fixée par adhésion et mécaniquement, étant vissée et / ou collée avec les deux étais verticaux (4) pour former l'unité de support (1).

2. Support de montage selon la revendication 1,
**caractérisé en ce que**
la région centrale (5) de la traverse (2), située entre les points d'assemblage aux étais verticaux (4), et les étais verticaux (4) sont disposés dans un plan commun.

3. Support de montage selon revendication 1 ou 2,
**caractérisé en ce que**
les étais verticaux (4) sont également réalisés selon le mode de construction hybride de la traverse (2), les propriétés de rigidité et les propriétés thermiques de la traverse (2) et celles des deux étais verticaux (4) étant semblables.

4. Support de montage selon l'une des revendications 1 à 3,
**caractérisé en ce que**
les étais verticaux (4) consistent en matière synthétique renforcée par des fibres.

5. Support de montage selon la revendication 4,
**caractérisé en ce que**
les étais verticaux (4) consistent en métal léger.

6. Support de montage selon revendication 4 ou 5,
**caractérisé en ce que**
le matériau des étais verticaux (4) correspond au matériau de la traverse (2) quant à ses propriétés de rigidité et ses propriétés thermiques.

7. Support de montage selon l'une des revendications 1 à 6,
**caractérisé en ce que**,
entre la section située à la hauteur du flasque (6) de chaque étai vertical (4) et le milieu de la traverse (2), vu par rapport à l'étendue longitudinale de celle-ci, sont disposées des étais diagonaux (8) qui sont en même matériau ou en matériau composite que les étais verticaux.

8. Support de montage selon l'une des revendications 1 à 7,
**caractérisé en ce que**,
sur les côtés extérieurs des étais verticaux (4), sont formés des étais horizontaux (9, 10), qui embrassent par le bas et / ou par le haut des réceptacles de phares (11).
